# EUROPÄISCHE PATENTANMELDUNG

(11) **EP 0 794 680 A2**
(43) Veröffentlichungstag der Anmeldung: **10.09.1997**
(21) Anmeldenummer: 97400319.6
(22) Anmeldetag: 12.02.1997
(51) Int. Cl.: H04Q 7/22

(54) **Verfahren zum Betreiben einer Breitband-Verbindung zwischen einem Mobilfunk-Endgerät und einer netzseitigem Mobilfunkeinrichtung sowie Mobilfunk-Endgerät, netzseitige Mobilfunkeinrichtung und Mobilfunksystem**

(30) Priorität: 13.02.1996 DE 19605223
(71) Anmelder: ALCATEL ALSTHOM COMPAGNIE GENERALE D'ELECTRICITE, 75008 Paris (FR)
(72) Erfinder: Rotter, Thomas, 73207 Plochingen (DE); Lorenz, Hans Jürgen, 74343 Sachsenheim (DE)
(74) Vertreter: Knecht, Ulrich Karl, Dipl.-Ing.

(57) **Zusammenfassung**

Die Erfindung betrifft ein Verfahren zum Betreiben einer Breitband-Verbindung für den Austausch von Daten (DAT) zwischen einem Mobilfunk-Endgerät (MS) und einer netzseitigen Mobilfunkeinrichtung (MSC) sowie das Mobilfunk-Endgerät (MS), die netzseitige Mobilfunkeinrichtung (MSC) und ein Mobilfunksystem. Zwei oder mehr Funkkanäle werden über eine Funkschnittstelle zu dem Mobilfunk-Endgerät (MS) aufgebaut und der Breitband-Verbindung als Unter-Kanäle (C1 bis CN) zugeordnet. Die Daten (DAT) werden sodann zwischen einer endgeräteseitigen Instanz (ENMT) und einer netzseitigen Instanz (ENNET) einer Kommunikationsschicht (L2) über die Unter-Kanäle (C1 bis CN) übertragen, wobei die Instanzen (ENMT, ENNET) die Daten (DAT) gemäß eines Übertragungsprotokolls als Datenpakete (FRDAT1, FRDAT2) austauschen sowie das Aufteilen des Datenpaket-Stroms auf die Unterkanäle (C1 bis CN) als auch dessen Rekombinierung steuern. Das Protokoll (PROT) definiert und unterstützt zwei oder mehr unterschiedliche Paket-Typen zum Datentransport. Die Instanzen (EMMT, ENNET) erkennen diese unterschiedlichen Paket-Typen und bearbeiten sie als unterschiedliche logische Verbindungen (LC1, LC2) derselben Kommunikationsschicht (L2) unterschiedlich.

## Beschreibung

Die Erfindung betrifft ein Verfahren zum Betreiben einer Breitband-Verbindung nach dem Oberbegriff von Anspruch 1, ein Mobilfunk-Endgerät nach dem Oberbegriff von Anspruch 7, eine netzseitige Mobilfunkeinrichtung nach dem Oberbegriff nach Anspruch 8 und ein Mobilfunksystem nach dem Oberbegriff nach Anspruch 11.

Für die Übertragung von Daten zwischen einem Mobilfunk-Endgerät und einer Mobilfunk-Vermittlungsstelle bestehen bei dem heutigen GSM-Mobilfunksystem (GSM = Global System for Mobile Communication) zwei Möglichkeiten: Zum einen können Daten über eine Verbindung gemäß dem V. 110 Protokoll mit konstantem Durchsatz und konstanter Übertragungszeitverzögerung transparent transportiert werden. Zum anderen können Daten mittels eines paketorientierten Protokolls, das allgemein als RLP Protokoll (RLP = Radio Link Protocol) bezeichnet wird, und mit geringerer Fehlerrate nicht transparent übertragen werden.

Die Erfindung geht nun von einer Möglichkeit für die Realisierung einer Breitband-Verbindung zu einem Mobilfunk-Endgerät aus, wie sie in der Spezifikation "European Digital Cellular Telecommunication System (FACE 2+) High Speed Circuit Switched Data (HSCSD); Stage 2 Service Description (GSM 03.34)" der ETSI (= European Telecommunication Standard Institiute), September 1995, beschrieben ist.

Diese Möglichkeit stellt eine Fortentwicklung obiger Übertragunsmechanismen dar. Für die Breitband-Verbindung werden 2 bis 8 Funkkanäle zu einem Mobilfunk-Endgerät aufgebaut und der Breitband-Verbindung als Unter-Kanäle zugeordnet. Anschließend werden die Ressourcen für das Übertragungsprotokoll eingerichtet. Die Breitband-Verbindung kann hierbei entweder für ein Übertragungsprotokoll mit transparenter Übertragung oder für ein solches mit nicht transparenter Übertragung eingerichtet werden.

Bei der transparenten Übertragung werden die Daten in einer Rahmenstruktur nach dem V. 110 Protokoll transportiert, wobei zusätzlich im Band Nummern mittransportiert werden, die den Unterkanal angeben. Die Daten werden so von der netzseitigen Instanz des Übertragunsprotokolls auf die Nutzkanäle verteilt und gemäß dem V. 110 Protokoll zur endgeräteseitigen Instanz übertragen, wo sie mittels der Unter-Kanal-Nummern wieder rekombiniert werden.

Es hat sich jedoch gezeigt, daß es bei einer auf diesem Prinzip beruhenden Breitband-Verbindung zu hohen Fehlerraten kommt, da die Rekombination aufgrund von Laufzeitdifferenzen zwischen den Unterkanälen nur unzureichend arbeitet.

Bei der nicht transparenten Übertragung wird ein modifiziertes RLP-Protokoll verwendet, das auch als MRLP-Protokoll (MRLP = Multiple Radio Link Protocol) bezeichnet wird. Das MRLP-Protokoll teilt die Datenpakete in der sendeseitigen Instanz auf die Unterkanäle auf und rekombiniert sie in der empfangseitigen Instanz mittels einer Sendenummer. Weiter werden bei diesem Protokoll fehlerhafte Datenpakete mittels eines Fehlerkorrekturverfahrens mit Wiederholung korrigiert.

Bei auf diesem Prinzip beruhenden Breitband-Verbindungen hat sich gezeigt, daß die Übertragungszeit der Datenpakete aufgrund der Fehlerkorrektur nicht konstant ist und die Breitband-Verbindung somit nicht die Anforderungen an eine synchrone Verbindung erfüllen kann. Damit kann keine der beiden alternativen Prinzipien eine für synchrone Übertragung brauchbare Breitband-Verbindung bereitstellen.

Der Erfindung liegt nun die Aufgabe zugrunde, eine Breitband-Verbindung zu einem Mobilfunk-Endgerät bereitzustellen, die auch für Multi-Media Anwendungen geeignet ist.

Diese Aufgabe wird gelöst durch ein Verfahren zum Betreiben einer Breitband-Verbindung nach der Lehre von Anspruch 1, sowie durch ein Mobilfunk-Endgerät, eine netzseitige Mobilfunkeinrichtung und ein Mobilfunksystem nach der Lehre von Anspruch 7, 8, bzw. 11.

Der Grundgedanke der Erfindung ist, in einem dem MRLP-Protokoll funktionell entsprechenden Protokoll ein oder mehrere zusätzliche Paket-Typen für den Datentransport einzuführen. Aus einer unterschiedlichen Behandlung dieser Paket-Typen, insbesondere in bezug auf das Fehlerkorrekturverfahren, resultieren zwei oder mehr mögliche logische Verbindungen in derselben Kommunikationsschicht mit unterschiedlichen Verkehrseigenschaften.

Vorteilhafte Ausgestaltungen der Erfindung sind den Unteransprüchen zu entnehmen.

Die Erfindung hat den Vorteil, daß für bestimmte Nachrichteninhalte eine gesicherte, asynchrone Übertragung mit sehr geringer Übertragunsfehlerhäufigkeit und, auch gleichzeitig, eine ungesicherte Übertragung mit konstanter Übertragungszeitverzögerung möglich ist. Weiter ist die Gesamtbandbreite dieser Übertragungen und der Bandbreitenanteil der einzelnen Übertragungsarten variabel. Dies kann insbesondere bei Multi-Media Anwendungen von Vorteil sein, die einen breitbandigen synchronen Kanal und einen schmalbandigen Steuerkanal benötigen.

Durch Verwendung eines Paket-Typs, der eine Sendenummer trägt und keiner Fehlerkorrektur unterworfen wird, wird eine Verbindung mit konstanter Übertragungszeitverzögerung bereitgestellt, bei der die Pakete korrekt rekombiniert werden und die so bestens als synchrone Datenverbindungen genutzt werden kann.

Durch Verwendung eines anderen Paket-Typs mit Sendefolgennummer, bei dem die Sendefolgennummer zur Fehlersicherung mit Wiederholung und zur Rekombinierung verwendet wird, wird eine asynchrone gesicherte Verbindung bereitgestellt.

Weitere Vorteile ergeben sich durch die einfache Implementierbarkeit der erfindungsgemäßen Lösung in bereits bestehende Standards und Protokollstrukturen. Als zusätzlicher Vorteil bietet sich hier die Doppel-Nutzung der vielfältigen MRLP-Dienstmerkmale auch für andere (nicht gesicherte und synchrone) Verbindungen.

Im folgenden wird Erfindung anhand eines Ausführungsbeispiels unter Zuhilfenahme beiliegender Zeichnungen näher erläutert.
- Fig. 1: zeigt eine funktionelle Darstellung eines erfindungsgemäßen Mobilfunksystems und der in diesen verwendeten Datentransportmechanismen.
- Fig. 2: zeigt eine detailliertere funktionelle Darstellung der Datentransportmechanismen nach Fig. 1.
- Fig. 3: zeigt eine Darstellung der Protokollstruktur der Kommunikationsmechanismen nach Fig. 1.

Im Ausführungsbeispiel wird nun die Durchführung des erfindungsgemäßen Verfahrens zur Bereitstellung einer Breitband-Verbindung in einem erfindungsgemäßen Kommunikationssystem erläutert, das über ein erfindungsgemäßes Mobilfunk-Endgerät und eine erfindungsgemäße netzseitige Mobilfunkeinrichtung verfügt.

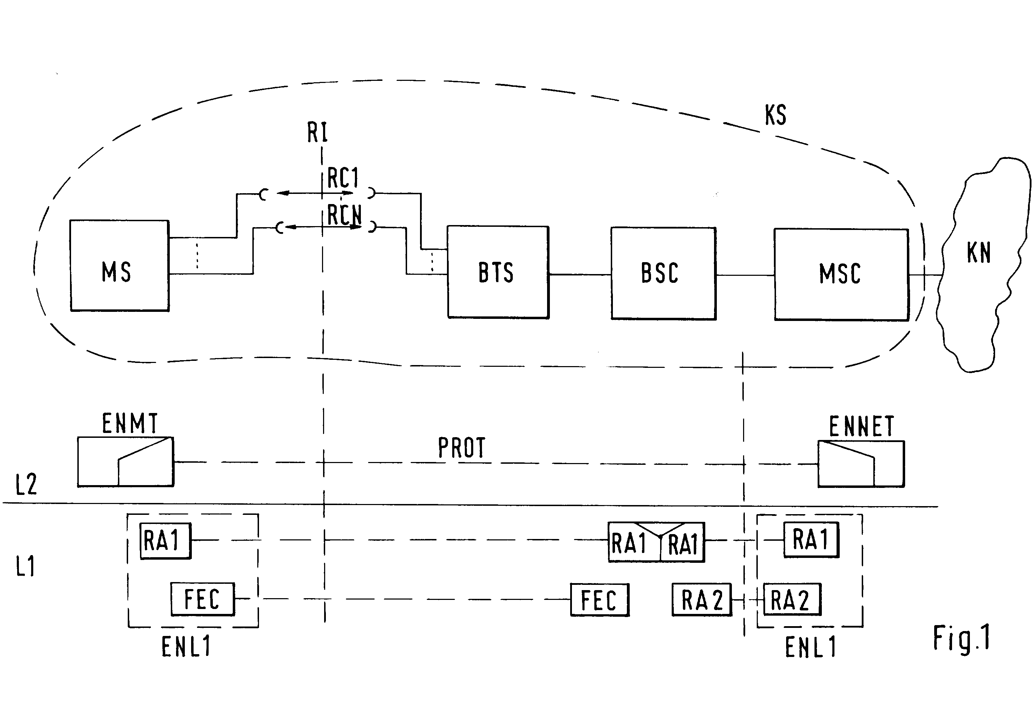

Fig. 1 zeigt ein Mobilfunksystem KS mit einem Mobilfunk-Endgerät MS, einer Funkfeststation BTS, einer Funkfeststation-Vermittlungseinheit BSC und einer Funkvermittlungsstelle MSC, sowie ein Kommunikationsnetz KN. Parallel zu dem Mobilfunksystem KS zeigt Fig. 1 die in zwei Kommunikationsschichten L1 und L2 notwendigen Funktionen zum Bereitstellen einer Breitband-Verbindung zwischen dem Mobilfunk-Endgerät MS und der Mobilfunk-Vermittlungstelle MSC.

Bei dem Mobilfunksystem KS handelt es sich um ein übliches Mobilfunksystem, vorzugsweise nach der GSM-Norm. Das Mobilfunk-Endgerät MS kommuniziert über eine Funk-Schnittstelle RI mit der Funkfeststation BTS, die von der Funkfeststation-Vermittlungseinheit BSC verwaltet wird. Diese ist wiederum mit der Mobilfunk-Vermittlungsstelle MSC verbunden, die den Verbindungsaufbau zum Mobilfunk-Endgerät MS steuert, die Teilnehmerdaten verwaltet und den Übergang in das Kommunikationsnetz KN bereitstellt.

Das Mobilfunk-Endgerät MS ist weitgehend wie ein übliches Mobilfunk-Endgerät aufgebaut. Es verfügt über Funktionen, die es ihm ermöglichen auch zwei oder mehr Funkkanäle zu der Funkfeststation BTS aufzubauen. Vorzugsweise handelt es sich bei dem Mobilfunk-Endgerät MS um ein Endgerät mit einer Anwendung, die einen breitbandigeren Datenanschluß erfordert. Solche Endgeräte sind beispielsweise mobile Bildtelefone, mobile Multi-Media-Endgeräte, mobile (Breitband) Faxe oder mobile Computer.

Bei dem Kommunikationsnetz KN handelt es sich um ein übliches Festnetz, beispielsweise um ein Fernsprechnetz. Das Kommunikationsnetz KN kann jedoch auch von einem Datennetz oder ebenfalls von einem Mobilfunknetz gebildet werden. Auch der Anschluß von mehreren Kommunikationnetzen KN, beispielsweise einem Fernsprechnetz und einem Datennetz, ist möglich.

Eine Breitband-Verbindung wird nun wie folgt bereitgestellt: Die Mobilfunk-Vermittlungsstelle MSC veranlaßt den Aufbau von Funkkanälen RC1 bis RCN zwischen der Funk-Feststation BTS und dem Mobilfunk-Endgerät MS. Diese Kanäle werden der Breitbandverbindung zugeordnet und anschließend die Ressourcen des Mobilfunksystems KS derart eingerichtet, daß die notwendigen Funktionen für den Aufbau einer Datentransport-Verbindung auf den Kommunikationsschichten L1 und L2 zwischen der Mobilfunk-Vermittlunsstelle MSC und dem Mobilfunk-Endgerät MS möglich ist.

Für die Kommunikationsschicht L1 werden hierbei immer Mobilfunk-Endgeräte MS die funktionen RA1' und FEC, in der Funk-Feststation-Vermittlungseinheit BSC die Funktionen FEC, RA1', RA1 und RA2 und in der Mobilfunk-Vermittlungsstelle MSC die Funktionen RA1 und RA2 bereitgestellt. Die Funktionen der Kommunikationsschicht L1 stehen hierbei für jeden der Funkkanäle RC1 bis RCN einmal zur Verfügung, und müssen somit für jeden der Funkkanäle RC1 bis RCN einmal eingerichtet werden. Die Funktion FEC führt die Fehlerkorrektur auf dem jeweiligen der Funkkanäle RC1 bis RCN durch. Die Funktionen RA1, RA1' und RA2 stellen Anpassungsfunktionen zur Anpassung der Datenrate dar.

Die Funktionen der Kommunikationsschicht L1, werden in dem Mobilfunk-Endgerät MS und in der Mobilfunk-Vermittlungstelle MSC für jeden der Unterkanäle jeweils in einer Instanz ENL1 durchgeführt. Die Funktionen für die Kommunikationsschicht L2 werden in dem Mobilfunk-Endgerät MS von einer Instanz ENMT durchgeführt, die im folgenden auch als endgeräteseitige Instanz bezeichnet wird. Die Funktionen für die Kommunikationsschicht L2, werden in der Mobilfunk-Vermittlungsstelle MSC von einer Instanz ENNET durchgeführt, die im folgenden auch als netzseitige Instanz bezeichnet wird. Die Instanzen ENMT und ENNET stellen die Transportverbindung für die Breitbandverbindung bereit, wobei der Transport gemäß eines Datenübertragunsprotokolls PROT erfolgt. Zum Transport der Daten greifen die Instanzen ENMT und ENNET hierbei auf die jeweils 8 Instanzen ENL1 zurück, die ihnen jeweils als Dienst den Transport über eine der Funkkanäle RC1 bis RCN anbieten. Die Funkkanäle RC1 bis RCN sind somit der Breitbandverbindung als Unterkanäle zugeordnet.

Es ist auch möglich, daß die netzseitigen Instanzen ENNET und ENL1 in der Funkfeststation BTS oder in der Funkfeststations-Vermittlungseinheit BCS angesiedelt sind. Neben der Integration der Instanzen ENNET und ENL1 in eine Mobilfunk-Vermittlungsstelle ist es auch möglich, daß die Instanzen in einer nachgeschalteten Vermittlungseinrichtung oder zentral für mehrere Mobilfunk-Vermittlungsstellen in einer zentralen Vermittlungseinrichtung bereitgestellt werden.

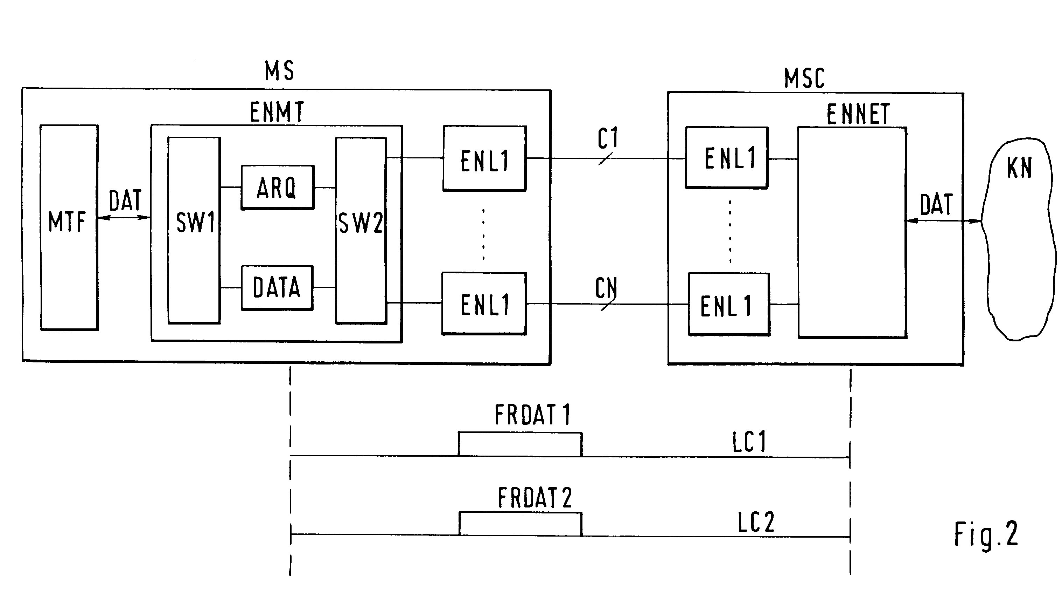

Der Datentransport für die Breitband-Verbindung wird nun anhand von Fig. 2 detaillierter dargestellt.

Fig. 2 zeigt das Mobilfunk-Endgerät MS, die Mobilfunk-Vermittlungsstelle MSC und das Kommunikationsnetz KN. Parallel dazu zeigt Fig. 2 zwei logische Kanäle LC1 und LC2 auf der Ebene der Kommunikationsschicht L2 zur Verdeutlichung des Transportmechanismus.

Das Mobilfunk-Endgerät MS weist eine Funktion MTF, die Instanz ENMT und die N Instanzen ENL1 auf. Die Mobilfunk-Vermittlungsstelle MSC weist die N Instanzen ENL1 und die Instanz ENNET auf. Die Instanzen ENL1 des Mobilfunk-Endgerätes MS sind jeweils über einen von N Unterkanälen C1 bis CN mit den entsprechenden Instanzen ENL1 der Mobilfunk-Vermittlungsstelle MSC verbunden.

Die Funktion MTF stellt diejenige Funktion des Mobilfunk-Endgerätes MS dar, die über die Breitband-Verbindung kommuniziert.

Die beiden Instanzen ENMT und ENNET stellen, wie bereits oben erläutert, einen Transportdienst auf der Kommunikationsschicht 2 bereit und nutzen ihrerseits die Transportdienste der Instanzen ENL1.

Die Funktion MTF tauscht mit der Instanz ENMT Daten DAT aus, die von der Funktion MTF über die Breitband-Verbindung versendet werden oder über die Breitband-Verbindungen für die Funktion MTF empfangen wurden. Ebenso tausch die Instanz ENNET Daten DAT mit dem Kommunikationssnetz KN aus, die entweder über die Breitband-Verbindung an die Funktion MTF zu senden sind oder von der Funktion MTF kommend an einen Teilnehmer des Kommunikationsnetzes KN zu senden sind.

Die Instanzen ENMT und ENNET sind analog zueinander aufgebaut und führen ihre Funktionen gemäß des Protokolls PROT durch. Im folgenden werden beispielhaft die Funktionen der Instanz ENMT beschrieben.

Die Instanz ENMT kommuniziert mit der Instanz ENNET, in dem sie dieser Datenpakete mittels der Instanzen ENL1 zusendet und von dieser empfängt. Es stehen hierbei verschiedene Typen von Datenpaketen für diese Kommunikation zur Verfügung.

Dies sind zum einen Steuer-Datenpakete, die der Steuerung der Verbindung dienen, beispielsweise dem Verbindungsaufbau oder dem Wiederaufbau der Verbindung nach erkennen eines Fehlers. Zum anderen sind zwei verschiedene Typen von Nutz-Datenpaketen, Nutz-Datenpakete vom Typ A und vom Typ B, vorgesehen, die dem Transport von Daten dienen. Die unterschiedlichen Typen von Steuer- und Nutz-Datenpaketen unterscheiden sich hierbei durch eine Kennung im Kopf des jeweiligen Datenpaketes. Gemäß dieser Kennung werden sie in der Instanz ENMT entweder als Steuer-Datenpaket oder als Nutz-Datenpaket vom Typ A oder vom Typ B behandelt.

Die Instanz ENMT weist nun vier Funktionen SW1, SW2, ARQ, DATA auf, die der Bearbeitung von Datenpaketen für den Transport von Nutzdaten dienen.

An die Funktion SW2 werden die von den Instanzen ENL1 empfangenen Nutz-Datenpakete geleitet. Die Funktion SW2 untersucht die Kennung eines ankommenden Nutz-Datenpaketes und ermittelt, ob es sich um ein Nutz-Datenpaket des Typs A oder des Typs B handelt. Nutz-Datenpakete des Typs 1 leitet diese dann an die Funktion ARQ und Nutz-Datenpakete des Typs B an die Funktion DATA weiter.

Die Funktion ARQ führt eine Fehlersicherung für die Nutz-Datenpakete vom Typ A durch. Bei Erkennen eines Fehlers in einem Datenpaket oder bei Erkennen des Verlusts eines Datenpaketes, fordert sie von der Instanz ENMT die Wiederholung des falschen oder verlorengegangenen Datenpaketes an. Eine solche Anforderung wird hierbei von der Funktion ARQ durch das Senden von speziellen Steuer-Datenpakete an die Instanz ENMT veranlaßt. Für die genaue Durchführung dieses Fehlerkorrektur-Verfahrens wird auf die bereits oben angeführten Normen GSM 03.34, September 1995, verwiesen.

Es ist auch möglich, daß durch die Funktion ARQ ein anderes Fehlerkorrektur-Verfahren mit Wiederholung durchgeführt wird.

Neben der Fehlerkorrektur führt die Funktion ARQ auch die Rekombination für die Nutz-Datenpakete vom Typ A durch. Sendeseitig werden diese Datenpakete von der Instanz ENNET über die Unterkanäle C1 bis CN verteilt, so daß sie in der Instanz ENMT wieder in der richtigen Reihenfolge rekombiniert werden müssen. Diese Aufgabe wird von der Funktion ARQ ebenfalls mittels der bereits für die Fehlerkorrektur verwendeten Sendenummer durchgeführt, die in dem Kopf der Nutz-Datenpakete vom Typ A mitübertragen wird. Einzelheiten sind ebenfalls obiger Norm GSM 03.34, September 1995, zu entnehmen.

Anschließend werden die sich nun in richtiger Reihenfolge befinden Nutz-Datenpakete vom Typ A an die Funktion SW1 weitergeleitet.

Die Funktion DATA bearbeitet die Nutz-Datenpakete vom Typ B. Im Gegensatz zur Funktion ARQ führt sie für diese Datenpakete keine Sicherung mit Wiederholung durch. Überhaupt keine Fehlersicherung zu verwenden, hat hierbei den Vorteil, daß sich dadurch die nutzbare Kapazität der Nutz-Datenpakete vom Typ B erhöht. Als Fehlerkorrekturverfahren ohne Wiederholung kommen beispielsweise Fehlerkorrekturverfahren nach Hamming in Frage.

Die Funktion DATA führt eine Rekombination für die Nutz-Datenpakete vom Typ B durch. Hierfür verwendet sie eine Sendefolgennummer, die beim Aufsplitten in der Instanz ENNET in den Kopf eines jeden Nutz-Datenpaketes vom Typ B eingefügt wird und die ursprüngliche Reihenfolge der Datenpakete anzeigt. Entsprechend dieser Nummer werden die Nutz-Datenpakete, vom Typ B von der Funktion DATA angeordnet und sodann an die Funktion SW1 weitergeleitet.

Es ist auch möglich, daß von der Funktion DATA eine andere Methode zur Rekombination verwendet wird. Beispielsweise ist es hierbei möglich, in den Kopf eines jeden der Nutz-Datenpakete vom Typ B, die Nummer des Unterkanals einzufügen, über den es übertragen wird.

Die Funktion SW1 empfängt Nutz-Datenpakete vom Typ A und B. Sie entnimmt die Nutzdaten den Datenpaketen und reicht diese entweder in zwei getrennten Datenströmen oder in einem einzigen Datenstrom entsprechend des von der Funktion MTF geforderten Datenformats an diese weiter.

Umgekehrt ordnet die Funktion SW1, die von der Funktion MTF an sie geleiteten Daten DAT entweder dem Paket-Typ A oder dem Paket-Typ B zu. Die Zuordnung erfolgt hierbei aufgrund des physikalischen oder des logischen Kanals, dem die ankommenden Daten DAT zugeordnet sind oder aufgrund von von der Funktion MTF empfangenen Steuersignalen. Die Daten werden sodann entsprechend ihrer Zuordnung in Nutz-Datenpakete vom Typ A oder vom Typ B gepackt und an die Funktionen ARQ oder DATA weitergeleitet. Die Funktionen ARQ und DATA führen sodann für die Nutz-Datenpakete ihres jeweiligen Typs das Aufsplitten auf die Unterkanäle C1 bis CN durch und leiten die Nutz-Datenpakete an die entsprechenden Instanzen ENL1 weiter. Auf jeden der Unterkanäle C1 bis CN können somit sowohl Nutz-Datenpakete vom Typ A und vom Typ B gemeinsam übertragen werden.

Zwischen den Instanzen MS und MSC bestehen somit zwei verschiedene logische Verbindungen LC1 und LC2 mit unterschiedlichen Verkehrseigenschaften. Die logische Verbindung LC1, wird durch den Austausch von Nutz-Datenpaketen FRDAT1 vom Typ A und die logische Verbindung LC2 durch den Austausch von Nutz-Datenpaketen FRDAT2 vom Typ B gebildet. Die Steuerung und Verwaltung der Verbindung erfolgt für beide logische Verbindungen LC1 und LC2 gemeinsam.

Es ist auch möglich, daß weitere Typen von Nutz-Datenpaketen durch das Protokoll PROT definiert sind und somit in den Instanzen ENMT und ENNET weitere den Funktionen ARQ und DATA entsprechende Funktionen eingefügt sind. Diese weiteren Typen von Nutz-Datenpaketen würden weitere logische Verbindungen entsprechend LC1 und LC2 unterstützen. Diese weiteren Typen von Nutz-Datenpaketen würden entsprechend zu den Funktionen DATA und ARQ gesagten ebenfalls im bezug auf die Fehlerkorrektur oder Rekombination unterschiedlich bearbeitet.

Es ist auch möglich, daß für eine Breitbandverbindung nur ein einziger der beiden Paket-Typen A und B für die Übertragung verwendet wird oder während der Verbindungen abwechselnd der eine oder der andere Paket-Typ verwendet wird.

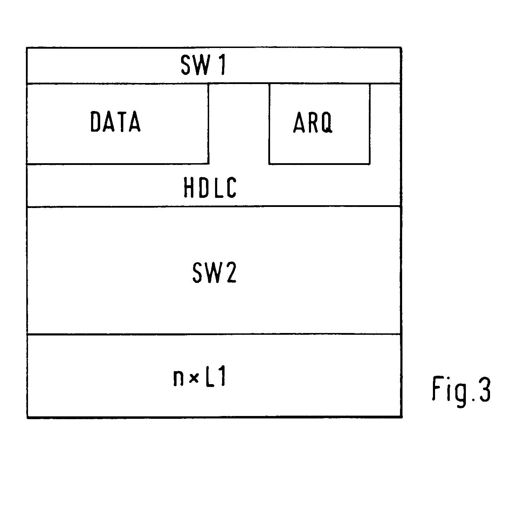

Anhand von Fig. 3 wird nun das Zusammenwirken der für die Bereitstellung der Breitband-Verbindungen benötigten Funktionen anhand eines Schichtenmodells eingehender erläutert.

Fig. 3 zeigt die Kommunikationsschichten L1 und L2.

Die Kommunikationsschicht L1 weist N Funktionen FL1 auf, die jeweils als Dienst den Transport von Daten über einen der Unterkanäle C1 bis CN der Kommunikationsschicht L2 zur Verfügung stellen.

Die Kommunikationsschicht L2 weist die bereits oben beschriebenen Funktionen SW2, SW1, DATA und ARQ, sowie eine Funktion HDLC auf.

Die Funktion HDLC führt die Steuerung und Verwaltung der Verbindung auf der Kommunikationsschicht 2 durch. Sie ist so für den Verbindungsaufbau, den Verbindungsabbau, die Wiederaufnahme der Verbindung nach einer Verbindungsunterbrechung und für die Verwaltung der zur Verfügung stehenden Kommunikationsressourcen verantwortlich. Sie fordert somit beispielsweise weitere Unterkanäle C1 bis CN an; gibt solche Unterkanäle wieder frei und legt fest, welche der Unterkanäle in die eine oder in die andere Richtung betrieben wird. Mögliche Leistungsmerkmale der Funktion HDLC können hierbei obiger Norm GSM 03.34, September 1995, entnommen werden. Die Funktion HDLC erbringt hierbei ihre Dienste für beide Typen A und B von Nutz-Datenpaketen.

Für die vom Protokoll PROT definierten Funktionen und Abläufe ergibt sich somit folgende Hierarchie:

Die Funktion SW2 setzt auf die Funktionen FL1 der Kommunikationsschicht L1 auf. Auf die Funktion SW2 setzt die Funktion HDLC auf, wobei die Funktionen DATA und ARQ integrale Bestandteile diese Funktion sind. Auf die Funktionen HDLC, DATA und ARQ setzt die Funktion SW1 auf.

## Patentansprüche

1. Verfahren zum Betreiben einer Breitband-Verbindung für den Austausch von Daten (DAT) zwischen einem Mobilfunk-Endgerät (MS) und einer netzseitigen Mobilfunkeinrichtung (MSC), bei dem zwei oder mehr Funkkanäle (RC1 bis RCN) über eine Funkschnittstelle (RI) zu dem Mobilfunk-Endgerät (MS) aufgebaut und der Breitband-Verbindung als Unter-Kanäle (C1 bis CN) zugeordnet werden und bei dem die Daten (DAT) zwischen einer endgeräteseitigen Instanz (ENMT) und einer netzseitigen Instanz (ENNET) einer Kommunikationsschicht (L2) über die Unter-Kanäle (C1 bis CN) übertragen werden, wobei die Instanzen (ENMT, ENNET) gemäß eines Übertragungsprotokolls (PROT) die Daten (DAT) als Datenpakete (FRDAT1, FRDAT2) austauschen sowie das Aufteilen des Datenpaket-Stroms auf die Unterkanäle (C1 bis CN) als auch dessen Rekombinierung steuern,
**dadurch gekennzeichnet,** daß das Protokoll (PROT) zwei oder mehr unterschiedliche Paket-Typen zum Datentransport definiert und unterstützt und daß die Instanzen (EMMT, ENNET) die unterschiedlichen Paket-Typen erkennen und sie als unterschiedliche logische Verbindungen (LC1, LC2) derselben Kommunikationsschicht (L2) unterschiedlich bearbeiten.

2. Verfahren nach Anspruch 1, dadurch gekennzeichnet, daß die Daten (DAT) zwischen den Instanzen (ENMT, ENNET) gleichzeitig mittels unterschiedlicher Paket-Typen übertragen werden.

3. Verfahren nach Anspruch 1, dadurch gekennzeichnet, daß die Daten (DAT) zwischen den Instanzen (ENMT, ENNET) mittels eines einzigen der zwei oder mehr Paket-Typen übertragen werden.

4. Verfahren nach Anspruch 1, dadurch gekennzeichnet, daß das Protokoll (PROT) die Funktionen eines MRLP-Protokolls erbringt.

5. Verfahren nach Anspruch 1, dadurch gekennzeichnet, daß zwei Paket-Typen, ein erster und ein zweiter Paket-Typ, definiert werden und daß die Instanzen (ENMT, ENNET) den ersten Paket-Typ mit einem Fehlersicherungs-Verfahren mit Wiederholung bearbeiten, dieses Fehlersicherungsverfahren für den zweiten Paket-Typ jedoch unterdrückt wird.

6. Verfahren nach Anspruch 5, dadurch gekennzeichnet, daß der zweite Paket-Typ über eine Sendefolgen-Nummer zur Rekombination verfügt.

7. Mobilfunk-Endgerät (MS) mit Mitteln zum Aufbau von zwei oder mehr Funkkanälen (RC1 bis RCN) über eine Funkschnittstelle (RI) zu einer Funkfeststation (BTS), mit Mitteln zum Zuordnen der Funkkanäle (RC1 bis RC2) als Unterkanäle (C1 bis CN) zu einer Breitband-Verbindung und mit einer endgeräteseitigen Instanz (ENMI) zum Austausch von Daten (DAT) über die Breiband-Verbindung, die so ausgestaltet ist, daß sie die Daten gemäß eines Übertragunsprotokolls (PROT) als Datenpakete über die Unterkanäle (C1 bis CN) mit einer netzseitigen Instanz (ENNET) derselben Kommunikationsschicht (L2) austauscht sowie das Aufteilen des Datenpaket-Stroms auf die Unterkanäle (C1 bis CN) als auch dessen Rekombinierung steuert,
**dadurch gekennzeichnet,** daß durch das Protokoll (PROT) zwei oder mehr unterschiedliche Paket-Typen zum Datentransport definiert sind und daß die endgeräteseitige Instanz (ENMT) mit Mitteln (SW1) zum Erkennen der unterschiedlichen Paket-Typen und mit Mitteln (DATA, ARQ) zur unterschiedlichen Bearbeitung als unterschiedliche logische Verbindungen (LC1, LC2) derselben Kommunikationsschicht (L2) versehen ist.

8. Netzseitige Mobilfunk-Einrichtung (MSC) zum Austauschen von Daten (DAT) mit einem Mobilfunk-Endgerät (MS), über eine Breitband-Verbindung, der zwei oder mehr Funkkanäle (RC1 bis RCN) zu dem Mobilfunk-Endgerät (MS) als Unterkanäle (C1 bis CN) zugeordnet sind, wobei die Mobilfunk-Einrichtung mit einer netzseitigen Instanz versehen ist, die so ausgstaltet ist, daß sie die Daten (DAT) gemäß eines Übertragungsprotokolls (PROT) als Datenpakete (FRDAT1, FRMAT2) über die Unterkanäle mit einer endgeräteseitigen Instanz (ENMT) austauscht sowie das Aufteilen des Datenpaket-Stroms auf die Unterkanäle (C1 bis CN) als auch dessen Rekombinierung steuert,
**dadurch gekennzeichnet,**
daß durch das Protokoll (PROT) zwei oder mehr unterschiedliche Paket-Typen zum Datentransport definiert sind und daß die netzseitige Instanz (ENNET) mit Mitteln zum Erkennen der unterschiedlichen Paket-Typen und mit Mitteln zur unterschiedlichen Bearbeitung als unterschiedliche logische Verbindungen (LC1, LC2) derselben Kommunikationsschicht (L2) versehen ist.

9. Netzseitige Mobilfunkeinrichtung (MSC) nach Anspruch 8, dadurch gekennzeichnet, daß die Mobilfunkeinrichtung eine Mobilfunk-Vermittlungsstelle ist.

10. Netzseitige Mobilfunkeinrichtung nach Anspruch 8, dadurch gekennzeichnet, daß die Mobilfunkeinrichtung einer Mobilfunk-Vermittlungsstelle nachgeschaltet ist oder zentral mehreren Mobilfunk-Vermittlungsstellen nachgeschaltet ist.

11. Mobilfunksystem (KS) mit Mitteln zum Aufbau von zwei oder mehr Funkkanälen (RC1 bis RCN), über eine Funkschnittstelle (RI) zu einem Mobilfunk-Endgerät (MS), mit Mitteln zum Zuordnen der Funkkanäle (RC1 bis RCN) als Unterkanäle (C1 bis CN) zu einer Breitband-Vverbindung und mit einer netzseitigen Instanz (ENNET), zum Austausch von Daten (DAT) über die Breitband-Verbindung, die so ausgestaltet ist, daß sie die Daten (DAT) gemäß eines Übertragungsprotokolls (PROT) als Datenpakete über die Unterkanäle mit einer endgeräteseitigen Instanz (ENMT) derselben Kommunikationsschicht (L2) austauscht sowie das Aufteilen des Datenpaket-Stroms auf die Unterkanäle (C1 bis CN) als auch dessen Rekombinierung steuert, **dadurch gekennzeichnet,** daß durch das Protokoll (PROT) zwei oder mehr unterschiedliche Paket-Typen zum Datentransport definiert sind und daß die netzseitige Instanz (ENNET) mit Mitteln zum Erkennen der unterschiedlichen Paket-Typen und mit Mitteln zur unterschiedlichen Bearbeitung als unterschiedlich logische Verbindungen (LC1, LC2) derselben Kommunikationsschicht (L2) versehen ist.
